# EUROPEAN PATENT APPLICATION

(11) **EP 3 244 359 A1**
(43) Date of publication of application: **15.11.2017**
(21) Application number: 15876505.7
(22) Date of filing: 30.01.2015
(51) Int. Cl.: G06Q 20/38

(54) **PROTECTION METHOD AND APPARATUS OF MOBILE PAYMENT INFORMATION, AND MOBILE PAYMENT SYSTEM**

(30) Priority: 06.01.2015 CN 201510005221
(71) Applicant: Yulong Computer Telecommunication Scientific (Shenzhen) Co., Ltd., Shenzhen, Guangdong 518057 (CN)
(72) Inventor: ZHONG, Yantao, Shenzhen Guangdong 518057 (CN); FU, Wenzhi, Shenzhen Guangdong 518057 (CN)
(74) Representative: Cordina, Kevin John
(86) International application number: PCT/CN2015/072011
(87) International publication number: WO 2016/109997

(57) **Abstract**

The present disclosure provides a protection method and device of mobile payment information, and a mobile payment system, the method includes: dynamically updating, by a card manufacturer's server, replacement code information corresponding to each payment account information stored in the card manufacturer's server; each time after the card manufacturer's server updates the replacement code information corresponding to each payment account information stored in the card manufacturer's server, updating a mapping relationship between the payment account information stored in the card manufacturer's server and the replacement code information according to the updated replacement code information; sending the updated replacement code information and corresponding payment account information to a mobile terminal, to enable the mobile terminal to perform a mobile payment using the updated replacement code information. The present disclosure can avoid leaking the mobile payment information and protect user privacy data.

## Description

### CROSS-REFERENCE TO RELATED APPLICATIONS

This application claims priority of Chinese Patent Application No. 201510005221.2, entitled "protection method and device of mobile payment information based on communication terminal, and mobile payment system," filed on January 6, 2015 in the SIPO (State Intellectual Property Office of the People's Republic of China), the entire contents of which are incorporated by reference herein.

### FIELD

The embodiments of the present disclosure relate to information security technology field, and specifically to a protection method and a device of mobile payment information, and a mobile payment system.

### BACKGROUND

With the rapid development of network communication technology, account payment methods have been developed from traditional face-to-face payment methods to open payment, online payment, mobile payment, etc. The mobile payment method has become an accounting method having a higher penetration rate and a wide applied range as convenience of the mobile payment method, which brings great convenience to people's life.

The mobile payment method refers to a service mode that allows users to use their mobile terminals (such as mobile phones, etc.) for performing account payments for consumer goods or services. A detailed procedure is briefly provided as follows: sending payment account information (generally including bank card number) to a payment terminal through a mobile terminal, sending mobile payment information to a card manufacture's server by the payment terminal, accomplishing a payment according to the mobile payment information by the card manufacture's server. The mobile payment information therein includes the payment account information and payment amount information, etc. Although the mobile payment method brings convenience to people's life, but also has a problem that user privacy information of the users is easy to leak out, such as payment account information of the users can be collected from the mobile payment information, purchasing habits and lifestyle information can be statistical analyzed through the mobile payment information of the users, thereby the privacy information of the users is leaked out. Therefore, it is in urgent need of a method for protecting the mobile payment information during a mobile payment procedure.

### SUMMARY

Regarding the above-mentioned defects, the present disclosure provides a protection method and a device of mobile payment information, and a mobile payment system, to solve a current problem that privacy information is easy to leak out during a mobile payment procedure.

In a first embodiment, a protection method of mobile payment information is provided, the method includes:

Dynamically updating, by a card manufacturer's server, replacement code information corresponding to each payment account information stored in the card manufacturer's server;

Each time after the card manufacturer's server updates the replacement code information corresponding to each payment account information stored in the card manufacturer's server, updating a mapping relationship between the payment account information stored in the card manufacturer's server and the replacement code information according to the updated replacement code information;

Each time after the card manufacturer's server updates the replacement code information corresponding to each payment account information stored in the card manufacturer's server, sending the updated replacement code information and corresponding payment account information to a mobile terminal, to enable the mobile terminal to perform a mobile payment using the updated replacement code information.

Preferably, the mobile terminal performing the mobile payment using the updated replacement code information includes:

Sending the updated replacement code information by the mobile terminal to a payment terminal;

Sending mobile payment information to the card manufacturer's server by the payment terminal after the payment terminal receives the updated replacement code information, the mobile payment information including the updated replacement code information and payment amount information;

Searching mapping relations between stored payment account information and replacement code information by the card manufacturer's server, finding payment account information corresponding to the updated replacement code information, and sending the found payment account information and the payment amount information to an issuing bank system through a card manufacturer's payment gateway, to enable the issuing bank system to process a payment according to the found payment account information and the payment amount information.

Preferably, dynamically updating, by the card manufacturer's server, replacement code information corresponding to each payment account information stored in the card manufacturer's server includes:
Setting an updating period by the card manufacture's server;
Updating, by the card manufacturer's server, the replacement code information corresponding to each payment account information stored in the card manufacturer's server periodically according to the updating period.

Preferably, dynamically updating, by the card manufacturer's server, replacement code information corresponding to each payment account information stored in the card manufacturer's server includes:
Receiving a replacement code updating request by the card manufacturer's server from the mobile terminal, the replacement code updating request comprising the payment account information;
Updating, by the card manufacturer's server, replacement code information corresponding to the payment account information in the replacement code updating request.

In a second embodiment, a protection device of mobile payment information is provided, the device includes:
A first updating unit configured to dynamically update replacement code information corresponding to each payment account information stored in a card manufacturer's server;
A second updating unit configured to update a mapping relationship between the payment account information stored in the card manufacturer's server and the replacement code information according to the updated replacement code information, each time after updating the replacement code information corresponding to each payment account information stored in the card manufacturer's server;
A replacement code sync unit configured to send the updated replacement code information and corresponding payment account information to a mobile terminal to enable the mobile terminal to perform a mobile payment using the updated replacement code information, each time after updating the replacement code information corresponding to each payment account information stored in the card manufacturer's server.

Preferably, the device further includes:
A mobile payment information receiving unit configured to receive the mobile payment information from a payment terminal, the mobile payment information comprising payment amount information and the updated replacement code information sent from the mobile terminal to the payment terminal;
A search unit configured to search the card manufacturer's server for mapping relations between stored payment account information and replacement code information, find payment account information corresponding to the updated replacement code information, and send the found payment account information and the payment amount information to an issuing bank system through a card manufacturer's payment gateway, to enable the issuing bank system to process a payment according to the found payment account information and the payment amount information.

Preferably, the first updating unit includes:
An updating period setting module configured to set an updating period;
A first updating module configured to update the replacement code information corresponding to each payment account information stored in the card manufacturer's server periodically according to the updating period.

Preferably, the first updating unit includes:
A updating request receiving module configured to receive a replacement code updating request from the mobile terminal, the replacement code updating request comprising the payment account information;
A second updating module configured to update replacement code information corresponding to the payment account information in the replacement code updating request.

In a third embodiment, a mobile payment system is provided, and includes a mobile terminal, a payment terminal, a card manufacturer's server, and an issuing bank system that communicates with the card manufacturer's server through a card manufacturer's payment gateway, the card manufacturer's server includes:
A first updating unit configured to dynamically update replacement code information corresponding to each payment account information stored in the card manufacturer's server;
A second updating unit configured to update a mapping relationship between the payment account information stored in the card manufacturer's server and the replacement code information according to the updated replacement code information, each time after updating the replacement code information corresponding to each payment account information stored in the card manufacturer's server;
A replacement code sync unit configured to send the updated replacement code information and corresponding payment account information to the mobile terminal to enable the mobile terminal to perform a mobile payment using the updated replacement code information, each time after updating the replacement code information corresponding to each payment account information stored in the card manufacturer's server.

Preferably, the card manufacturer's server further includes:
A mobile payment information receiving unit configured to receive the mobile payment information from the payment terminal, the mobile payment information comprising payment amount information and the updated replacement code information sent from the mobile terminal to the payment terminal;
A search unit configured to search the card manufacturer's server for mapping relations between stored payment account information and replacement code information, find payment account information corresponding to the updated replacement code information, and send the found payment account information and the payment amount information to the issuing bank system through the card manufacturer's payment gateway, to enable the issuing bank system to process a payment according to the found payment account information and the payment amount information.

Compared to prior art, the technical proposal provided by the present disclosure has advantages as follows:
The present disclosure dynamically updates replacement code information corresponding to payment account information by using a card manufacturer's server, and sends the updated replacement code information to a mobile terminal each time after the card manufacturer's server updates the replacement code information corresponding to the payment account information, and the mobile terminal performs a mobile payment using the updated replacement code information after the mobile terminal receives the updated replacement code information. Thus, leakage of the mobile payment information during the mobile payment procedure can be avoided, and privacy data of users can be protected.

### BRIEF DESCRIPTION OF THE DRAWINGS

To describe the technical solutions in embodiments of the present disclosure or in the prior art more clearly, the following briefly introduces the accompanying drawings needed for describing the embodiments. Apparently, the accompanying drawings in the following description show merely some embodiments of the present disclosure, and persons of ordinary skill in the art may still derive other drawings from these accompanying drawings without creative efforts.
FIG. 1 is a structure diagram of a mobile payment system provided in one embodiment of the present disclosure;
FIG. 2 is a flowchart of the realization of a protection method of mobile payment information provided in one embodiment of the present disclosure;
FIG. 3 is a flowchart of the realization of step S201 in FIG. 2 provided in one embodiment of the present disclosure;
FIG. 4 is a flowchart of the realization of step S201 in FIG. 2 provided in another embodiment of the present disclosure;
FIG. 5 is a flowchart of the realization of a mobile payments using updated replacement code information by a mobile terminal provided in one embodiment of the present disclosure;
FIG. 6 is a flowchart of the realization of a mobile payment using updated replacement code information by a mobile terminal provided in another embodiment of the present disclosure;
FIG. 7 is a flowchart of the realization of a protection method of mobile payment information provided in another embodiment of the present disclosure;
FIG. 8 is a structure diagram of a protection device of mobile payment information provided in one embodiment of the present disclosure;
FIG. 9 is a structure diagram of a protection device of mobile payment information provided in another embodiment of the present disclosure.

### DETAILED DESCRIPTION

The following clearly and completely describes the technical solutions in the embodiments of the present disclosure with reference to the accompanying drawings in the embodiments of the present disclosure. Apparently, the described embodiments are merely a part rather than all of the embodiments of the present disclosure. All other embodiments obtained by persons of ordinary skill in the art based on the embodiments of the present disclosure without creative efforts shall fall within the protection scope of the present disclosure.

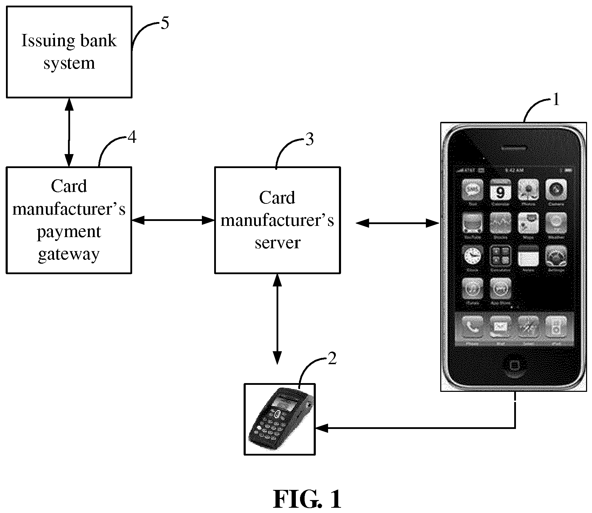

FIG. 1 is a structure diagram of a mobile payment system provided in one embodiment of the present disclosure. The mobile payment system includes a mobile terminal 1, a payment terminal 2 that can communicate with the mobile terminal 1, a card manufacturer's server 3 that can communicate with the mobile terminal 1 and with the payment terminal 2 respectively, and an issuing bank system 5 that can communicate with the card manufacturer's server 3 through a card manufacturer's payment gateway 4, in which:

The mobile terminal 1 can communicate with the payment terminal 2 through various short distance communication modes, for example, the short distance communication modes include, but are not limited to near field communication (NFC) mode. When the mobile terminal 1 communicates with the payment terminal 2 in the NFC mode, both of the mobile terminal 1 and the payment terminal 2 are apparatus support the NFC feature. For example, both of the mobile terminal 1 and the payment terminal 2 include an NFC communication module, such as an NFC chip, etc. The mobile terminal 1 can be a mobile phone, for example.

The payment terminal 2 is an apparatus that can communicate with the mobile terminal 1 and can scan information of a payment object, such as a point of sale (POS) terminal, etc. The payment object is an object that needs to be paid by a user, such as a product or a service that has to be paid for. By scanning the payment object, the payment terminal 2 can calculate payment amount information according to scanned payment object information.

The mobile terminal 1 can communicate with the card manufacturer's server 3 through a mobile network (such as 3G, 4G, etc.) or a wireless network (such as Wi-Fi, etc.). The mobile network is preferred for communication.

When the user needs to perform a mobile payment, by scanning payment object information using the payment terminal 2 provided by a merchant, the user brings the mobile terminal 1 closer to the payment terminal 2 after calculating the payment amount information according to the payment object information, and inputs payment verification information into the mobile terminal 1. The mobile terminal 1 verifies the input payment verification information, and sends updated replacement code information to the payment terminal 2 in the NFC mode after the verification is passed. After receiving the updated replacement code information sent from the mobile terminal 1, the payment terminal 2 sends the mobile payment information to the card manufacturer's server 3. After receiving the mobile payment information, the card manufacturer's server 3 acquires the updated replacement code information from the mobile payment information, and searches for mapping relations between stored payment account information and replacement code information for the updated replacement code information. If the updated replacement code information exists, the card manufacturer's server 3 acquires payment account information corresponding to the updated replacement code information, combines the acquired payment account information with the payment amount information in the mobile payment information and then sends the combined information to the issuing bank system 5 through the card manufacturer's payment gateway 4. The issuing bank system 5 deducts a payment amount corresponding to the payment amount information from a payment account corresponding to the payment account information, to complete a mobile payment.

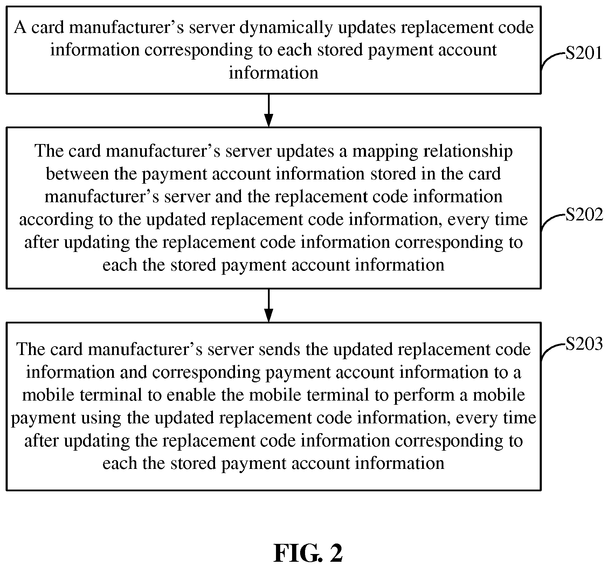

The card manufacturer's server 3 is a server set up by a card manufacturer, the card manufacturer's payment gateway 4 is an interface between a bank system and a network, and is a server set up by a bank to convert data transmitted on the network into internal data in the bank. The issuing bank system 5 is another server set up by the bank. The card manufacturer's payment gateway 4 communicates with the card manufacturer's server 3 and with the issuing bank system 5 respectively through the network. FIG. 2 shows a flowchart of the realization of a protection method of mobile payment information provided in one embodiment of the present disclosure, detailed description follows below:
S201, the card manufacturer's server 3 dynamically updates replacement code information corresponding to each stored payment account information.

The payment account information indicates information of a payment account that is used in a mobile payment procedure, for example, the payment account information may be a bank card number, etc. The replacement code information is generated by the card manufacturer's server 3 for the payment account information to correspond to the payment account information one-to-one, and is used to represent a replacement code of the payment account information used in the mobile payment procedure.

In one embodiment, before the card manufacturer's server dynamically updates the replacement code information corresponding to each stored payment account information, each payment account needs to be registered in the card manufacturer's server. A detailed procedure for registering the payment account in the card manufacturer's server is provided below:
A1, the card manufacturer's server receives a registration request of a payment account sent from the mobile terminal, the registration request of the payment account includes the payment account information.
In one embodiment, when a payment account (e.g., a bank card) needs to be used in a mobile payment, the payment account needs to be registered in the card manufacturer's server.
In detail, the mobile terminal provides a human-computer interface for the user to input the payment account information that needs to be registered and input the registration request of the payment account. After receiving the payment account information and the registration request of the payment account input by the user, the mobile terminal sends the registration request of the payment account including the payment account information to the card manufacturer's server.
A2, the card manufacturer's server generates corresponding replacement code information randomly for the payment account information in the registration request of the payment account, and stores a mapping relationship between the payment account information in the registration request of the payment account and the generated replacement code information in the card manufacturer's server.
In detail, after receiving the registration request of the payment account sent from the mobile terminal, the card manufacturer's server utilizes a preset random generation algorithm to generate corresponding replacement code information for the payment account information in the registration request of the payment account. The preset random generation algorithm can be any algorithm in the prior art, includes, but is not limited to various encryption algorithm, for example.
After generating corresponding replacement code information for the payment account information in the registration request of the payment account, the card manufacturer's server establishes and stores the mapping relationship between the payment account information in the registration request of the payment account and the generated replacement code information. The mapping relationship between the payment account information and the replacement code information is a one-to one relationship.
In one embodiment, the card manufacturer's server may utilize various kinds of storage method to store the mapping relationship between the payment account information and the replacement code information, such as a database table, for example. For easy to understand, an example is provided below:
When the payment account in the registration request of the payment account is a payment account 1, the replacement code information for the payment account 1 generated by the card manufacturer's server is aaa; when the payment account in the registration request of the payment account is a payment account 2, the replacement code information for the payment account 2 generated by the card manufacturer's server is bbb. Table 1 shows an example of a database table that stores the mapping relationship between the payment account information and the replacement code information, but the mapping relationship between the payment account information and the replacement code information is not limited to the example shown in the table.

**Table 1**

| Payment account information | Replacement code information |
|---|---|
| Payment account 1 | aaa |
| Payment account 2 | bbb |
| ...... | ...... |

A3, the card manufacturer's server sends the generated replacement code information and corresponding payment account information to the mobile terminal, to enable the mobile terminal to store the mapping relationship between the payment account information and the generated replacement code information.

In one embodiment, in order to enable the mobile terminal to perform the mobile payment by using the replacement code information to replace the payment account information, the card manufacturer's server sends the generated replacement code information and corresponding payment account information to the mobile terminal after generating the replacement code information for the payment account information in the registration request of the payment account, and the mobile terminal stores the mapping relationship between the payment account information and the generated replacement code information.

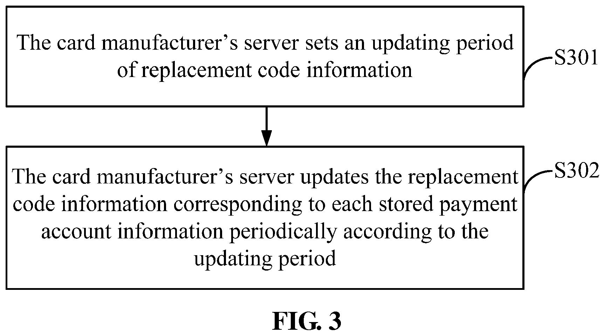

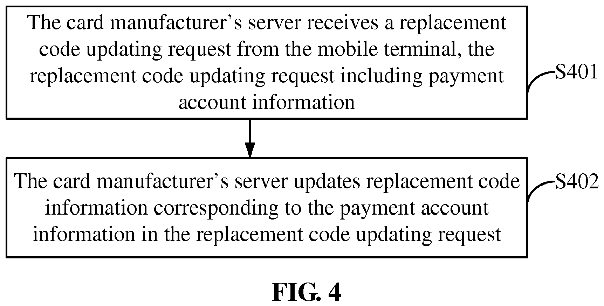

After registering the payment account information in the card manufacturer's server by the mobile terminal, the card manufacturer's server stores the payment account information sent by the mobile terminal, and then dynamically updates replacement code information corresponding to stored payment account information. Detailed procedures of dynamically updating replacement code information corresponding to stored payment account information by the card manufacturer's server are shown in FIG. 3 and FIG. 4, and there is no need to repeat here.

S202, each time after the card manufacturer's server updates the replacement code information corresponding to each stored payment account information, the card manufacturer's server updates a mapping relationship between the stored payment account information and the replacement code information according to the updated replacement code information.

In detail, after the mobile terminal registers the payment account in the card manufacturer's server, the card manufacturer's server stores the mapping relationship between the stored payment account information and the replacement code information as shown in Table 1. Thus, each time after updating the replacement code information corresponding to each stored payment account information, the card manufacturer's server finds payment account information corresponding to the updated replacement code information from the mapping relationship between the stored payment account information and the replacement code information, and updates replacement code information corresponding to the found payment account information to be the updated replacement code information. For easy to understand, an example is provided below:

It is assumed that the mapping relationship between the stored payment account information and the replacement code information in the card manufacturer's server is shown in table 1, the card manufacturer's server updates the replacement code information aaa of the payment account 1 to be a1a1a1, and updates the replacement code information bbb of the payment account 2 to be b1b1b1. Then, after the card manufacturer's server updates the mapping relationship between the stored payment account information and the replacement code information according to the updated replacement code information, the mapping relationship between the stored payment account information and the replacement code information can be obtained as shown in Table 2.

**Table 2**

| Payment account information | Replacement code information |
|---|---|
| Payment account 1 | a1a1a1 |
| Payment account 2 | b1b1b1 |
| ...... | ...... |

S203, each time after updating the replacement code information corresponding to the stored payment account information, the card manufacturer's server sends the updated replacement code information and corresponding payment account information to the mobile terminal, to enable the mobile terminal to perform the mobile payment using the updated replacement code information.

In detail, each time after updating the replacement code information corresponding to the stored payment account information, the card manufacturer's server sends the updated replacement code information and corresponding payment account information to the mobile terminal. When the mobile terminal receives the updated replacement code information and corresponding payment account information from the card manufacturer's server, the mobile terminal finds the payment account information, sent by the card manufacturer's server, in the mapping relationship between the payment account information and the replacement code information stored in the mobile terminal, and then replaces the replacement code information corresponding to the found payment account information with the updated replacement code information, so as to update the mapping relationship stored in the mobile terminal, between the payment account information and the replacement code information.

After the mobile terminal finishes updating the mapping relationship stored therein between the payment account information and the replacement code information, the mobile terminal can perform the following mobile payment by using the updated replacement code information.

In one embodiment, step S202 and step S203 can be executed according to a sequence as shown in FIG. 2, or executed concurrently. In other embodiments, the sequence of step S202 and step S203 shown in FIG. 2 can be exchanged without limitation.

In one embodiment, by dynamically updating replacement code information corresponding to the payment account information using the card manufacturer's server, sending the updated replacement code information to the mobile terminal by the card manufacturer's server each time after the card manufacturer's server dynamically updates the replacement code information corresponding to the payment account information, and performing the mobile payment using the updated replacement code information by the mobile terminal after receiving the updated replacement code information, leakage of mobile payment information during a mobile payment procedure can be avoided and privacy data of the user can be protected.

FIG. 3 is a flowchart of the realization of step S201 in FIG. 2 provided in one embodiment of the present disclosure, detailed description follows below:
S301, the card manufacturer's server sets an updating period of the replacement code information.

In detail, the card manufacturer's server may set a same updating period for the replacement code information corresponding to all of the stored payment account information, or set different updating periods for different payment account information, or classify the payment account information into different types and set an updating period for each type of the payment account information. It should be understood that the updating period can be set in other manners, other examples are not illustrated here one by one.

S302, the card manufacturer's server updates the replacement code information corresponding to each stored payment account information periodically according to the updating period.

In detail, after the card manufacturer's server sets the updating period for the replacement code information corresponding to the payment account information, the card manufacturer's server updates the replacement code information each time when the updating period set for the replacement code information is elapsed. A detailed procedure of updating the replacement code information can utilize the above mentioned preset random generation algorithm to regenerate replacement code information for the payment account information, and use the regenerated replacement code information to be the updated replacement code information corresponding to the payment account information.

In one embodiment, by setting the updating period(s) for the replacement code information corresponding to each payment account information, the replacement code information corresponding to each payment account information can be updated periodically.

FIG. 4 is a flowchart of the realization of step S201 in FIG. 2 provided in another embodiment of the present disclosure, detailed description is provided below:
S401, the card manufacturer's server receives a replacement code updating request sent from the mobile terminal, the replacement code updating request includes the payment account information.

In one embodiment, when the user of the mobile terminal wants to update the replacement code information corresponding to the payment account information, the replacement code updating request can be sent from the mobile terminal to the card manufacturer's server, and the replacement code updating request includes the payment account information corresponding to the replacement code information, which needs to be updated.

S402, the card manufacturer's server updates the replacement code information corresponding to the payment account information in the replacement code updating request.

In one embodiment, after receiving the replacement code updating request sent from the mobile terminal, the card manufacturer's server utilizes the above mentioned preset random generation algorithm to regenerate the replacement code information for the payment account information in the replacement code updating request, and uses the regenerated replacement code information to be the updated replacement code information corresponding to the payment account information in the replacement code updating request.

In one embodiment, the card manufacturer's server may updated the replacement code information corresponding to the payment account information after receiving the replacement code updating request sent from the mobile terminal, thereby having more flexibility.

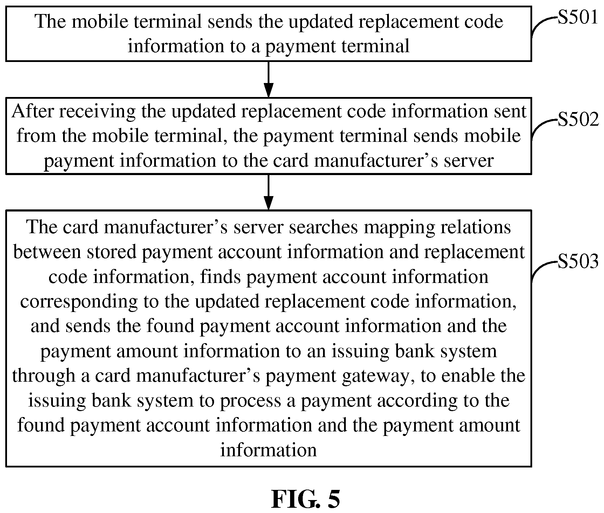

FIG. 5 is a flowchart of the realization of a mobile payments using updated replacement code information by a mobile terminal provided in one embodiment of the present disclosure, detailed description is provided below:
S501, the mobile terminal sends the updated replacement code information to the payment terminal.

In detail, the mobile terminal may sends the updated replacement code information to the payment terminal in the NFC mode. It should be understood that the mobile terminal also may send the updated replacement code information to the payment terminal through other short distance communication modes without any limitation here.

In one embodiment, when the user needs to perform a mobile payment, payment object information may be scanned by using a payment terminal (such as a POS terminal) provided by a merchant, and then payment amount information is calculated according to the payment object information. The user brings the mobile terminal closer to the payment terminal and inputs payment verification information in the mobile terminal. The mobile terminal verifies the input payment verification information, and sends the updated replacement code information to the payment terminal in the NFC mode after the verification is passed. The payment verification information can be fingerprint data, for example. When the payment verification information is the fingerprint data, the mobile terminal compares input fingerprint data of the user with valid fingerprint data stored in the mobile terminal. If a comparison result indicates that the input fingerprint data matches the valid fingerprint data, the verification is passed; otherwise, the verification is failed. The valid fingerprint data is fingerprint data prestored in the mobile terminal by the user for verification.

S502, after receiving the updated replacement code information from the mobile terminal, the payment terminal sends the mobile payment information to the card manufacturer's server, the mobile payment information including the updated replacement code information and the payment amount information.

In detail, after receiving the updated replacement code information from the mobile terminal, the payment terminal acquires the payment amount information calculated according to the scanned payment object information, combines the payment amount information and the updated replacement code information to be the mobile payment information, and sends the mobile payment information to the card manufacturer's server.

S503, the card manufacturer's server searches the mapping relations between the stored payment account information and the replacement code information, finds the payment account information corresponding to the updated replacement code information, and sends the found payment account information and the payment amount information to the issuing bank system through the card manufacturer's payment gateway, to enable the issuing bank system to process the payment according to the found payment account information and the payment amount information.

In detail, after receiving the mobile payment information sent from the payment terminal, the card manufacturer's server extracts the updated replacement code information from the mobile payment information, searches the mapping relations between the stored payment account information in the card manufacturer's server and the replacement code information and determines whether the updated replacement code information exists. If existing, the card manufacturer's server extracts the payment account information corresponding to the updated replacement code information, combines the extracted payment account information with the payment amount information in the mobile payment information, and sends combined information to the issuing bank system through the card manufacturer's payment gateway.

The issuing bank system deducts a payment amount corresponding to the payment amount information from a payment account corresponding to the payment account information, to perform the mobile payment.

In one embodiment, if the issuing bank system fails to deduct the payment amount corresponding to the payment amount information from the payment account corresponding to the payment account information, the issuing bank system sends payment failure information to the card manufacturer's server through the card manufacturer's payment gateway. The card manufacturer's server sends the payment failure information to the payment terminal, the payment terminal sends the payment failure information to the mobile terminal, to inform the user that the mobile payment is failed. In a similar way, if the payment is succeeded, payment success information can be sent to the mobile terminal according to the above mentioned procedure.

In one embodiment, each time after updating the replacement code information corresponding to the payment account information, the mobile terminal uses the updated replacement code information to perform the mobile payment, so as to avoid leakage of the mobile payment information, especially leakage of the payment account information, and protect the user privacy. Furthermore, as the replacement code information corresponding to the payment account information is updated dynamically, thereby avoiding acquiring purchasing habits of the user, interested products, and other privacy data by collecting and analyzing the replacement code information, and avoiding leakage of the privacy information of the user.

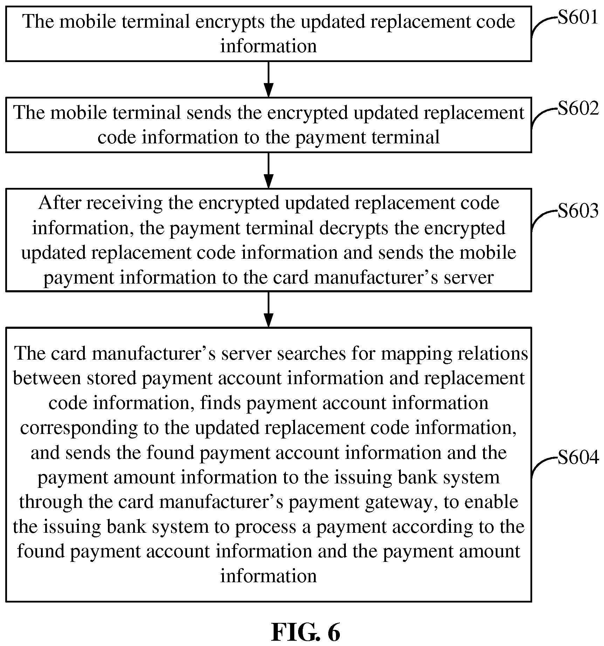

FIG. 6 is a flowchart of the realization of a mobile payment using updated replacement code information by a mobile terminal provided in another embodiment of the present disclosure. The procedure in FIG. 6 is improved based on the mobile payment procedure as illustrated in FIG. 5, step S602 to S604 in FIG. 6 are similar to steps S501 to S503 in FIG. 5, detailed description is provided below:
S601, the mobile terminal encrypts the updated replacement code information. An encryption algorithm utilized by the encryption can be any encryption algorithm in prior art, the encryption algorithm can be the same as or different with an encryption algorithm utilized by the card manufacturer's server.
S602, the mobile terminal sends the encrypted updated replacement code information to the payment terminal, a detailed procedure can be referred to S501 as mentioned above, there is no need to repeat here.
S603, after receiving the encrypted updated replacement code information from the mobile terminal, the payment terminal decrypts the encrypted updated replacement code information, and sends the mobile payment information to the card manufacturer's server. The mobile payment information includes the decrypted updated replacement code information and the payment amount information. A detailed procedure can be referred to S502 as mentioned above, there is no need to repeat here.
S604, the card manufacturer's server searches the mapping relations between the stored payment account information and the replacement code information, finds the payment account information corresponding to the updated replacement code information, and sends the found payment account information and the payment amount information to the issuing bank system through the card manufacturer's payment gateway, to enable the issuing bank system to process the payment according to the found payment account information and the payment amount information. A detailed procedure can be referred to S502 as mentioned above, there is no need to repeat here.

In one embodiment, by encrypting the replacement code information transmitted between the mobile terminal and the payment terminal, the safety for transmitting the replacement code information can be improved.

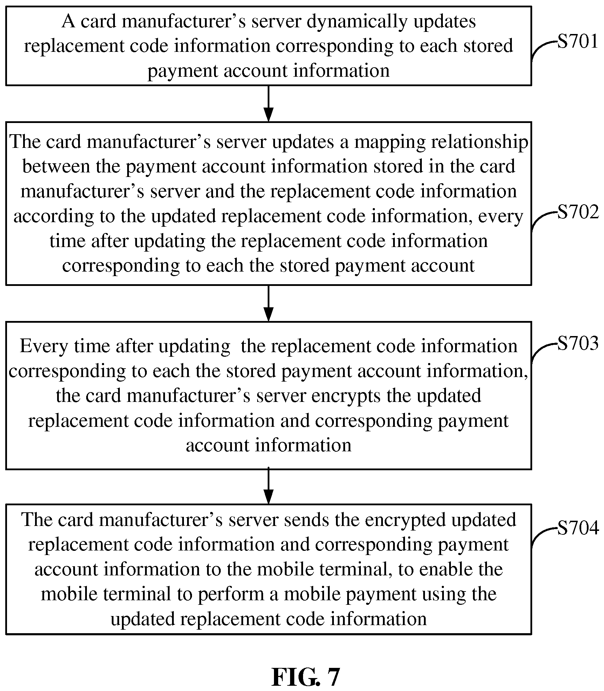

FIG. 7 is a flowchart of the realization of a protection method of mobile payment information provided in another embodiment of the present disclosure. The protection method of the mobile payment information in FIG. 7 is improved based on the protection method of the mobile payment information as illustrated in FIG. 2 to FIG. 6, detailed description is provided below:
S701, the card manufacturer's server dynamically updates the replacement code information corresponding to each stored payment account information. A detailed procedure can be referred to S201 as mentioned above, there is no need to repeat here.
S702, each time after the card manufacturer's server updates the replacement code information corresponding to each stored payment account information, the card manufacturer's server updates the mapping relationship between the stored payment account information and the replacement code information according to the updated replacement code information. A detailed procedure can be referred to S202 as mentioned above, there is no need to repeat here.
S703, each time after updating the replacement code information corresponding to the stored payment account information, the card manufacturer's server encrypts the updated replacement code information and corresponding payment account information.

In one embodiment, any encryption algorithm in prior art can be utilized to encrypt the updated replacement code information and corresponding payment account .information

S704, the card manufacturer's server sends the encrypted updated replacement code information and corresponding payment account information to the mobile terminal, to enable the mobile terminal to perform the mobile payment using the updated replacement code information.

In detail, after the card manufacturer's server sends the encrypted updated replacement code information and corresponding payment account information to the mobile terminal, the mobile terminal utilizes a decryption algorithm corresponding to the encryption algorithm, to decrypt the encrypted updated replacement code information and corresponding payment account information, updates the mapping relationship between the stored payment account information in the mobile terminal and the replacement code information using the decrypted updated replacement code information, and performs the mobile payment using the updated replacement code information.

In one embodiment, by encrypting the payment account information and the replacement code information transmitted between the mobile terminal and the card manufacturer's server, the safety of transmitting the payment account information and the replacement code information can be improved.

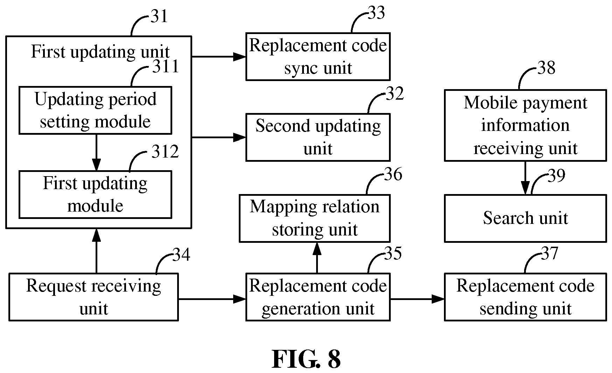

FIG. 8 is a structure diagram of a protection device of mobile payment information provided in one embodiment of the present disclosure. The protection device can be a software unit, a hardware unit or a combination unit of software and hardware embedded in the card manufacturer's server of the mobile payment system, or can be a independent plug-in unit that is integrated in the card manufacturer's server or in an operating system of the card manufacturer's server, such as the mobile payment system. Some descriptions that are not described detailed below can be referred to corresponding descriptions in methods as mentioned above. The protection device includes:

A first updating unit 31, which is configured to dynamically update replacement code information corresponding to each payment account information stored in a card manufacturer's server.

Preferably, the first updating unit 31 includes an updating period setting module 311 and a first updating module 312. The updating period setting module 311 is configured to set an updating period. The first updating module 312 is configured to update the replacement code information corresponding to each payment account information stored in the card manufacturer's server periodically according to the updating period.

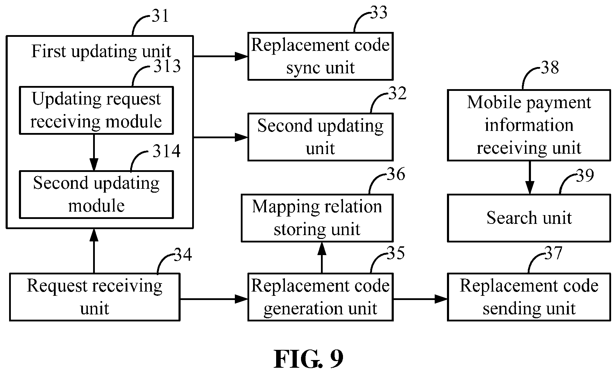

In another embodiment of the present disclosure, as shown in FIG. 9, the first updating unit 31 includes a updating request receiving module 313 and a second updating module 314. The updating request receiving module 313 is configured to receive a replacement code updating request from the mobile terminal, the replacement code updating request includes the payment account information. The second updating module 314 is configured to update replacement code information corresponding to the payment account information in the replacement code updating request

A second updating unit 32, which is configured to update a mapping relationship between the payment account information stored in the card manufacturer's server and the replacement code information according to the updated replacement code information, each time after updating the replacement code information corresponding to each payment account information stored in the card manufacturer's server.

A replacement code sync unit 33, which is configured to send the updated replacement code information and corresponding payment account information to the mobile terminal to enable the mobile terminal to update the mapping relationship between the payment account information stored in the mobile terminal and the replacement code information and perform a mobile payment using the updated replacement code information, each time after updating the replacement code information corresponding to each payment account information stored in the card manufacturer's server.

Preferably, the protection device further includes a request receiving unit 34, a replacement code generation unit 35, a mapping relationship storing unit 36, and a replacement code sending unit 37. Therein:
The request receiving unit 34 is configured to receive a registration request of the payment account sent by the mobile terminal, the registration request of the payment account includes the payment account information.

The replacement code generation unit 35 is configured to generate corresponding replacement code information randomly for the payment account information

The mapping relationship storing unit 36 is configured to store a mapping relationship between the payment account information in the registration request of the payment account and the generated replacement code information in the card manufacturer's server.

The replacement code sending unit 37 is configured to send the generated replacement code information generated by the replacement code generation unit and corresponding payment account information to the mobile terminal, to enable the mobile terminal to store the mapping relationship between the payment account information and the generated replacement code information.

Preferably, the protection device further includes a mobile payment information receiving unit 38 and a search unit 39. Therein:
The mobile payment information receiving unit 38 is configured to receive the mobile payment information from the payment terminal, the mobile payment information includes the payment amount information and the updated replacement code information sent from the mobile terminal to the payment terminal.

The search unit 39 is configured to search the card manufacturer's server for mapping relations between the stored payment account information and the replacement code information, find payment account information corresponding to the updated replacement code information, and send the found payment account information and the payment amount information to the issuing bank system through the card manufacturer's payment gateway, to enable the issuing bank system to process a payment according to the found payment account information and the payment amount information.

In another embodiment of the present disclosure, the structure of the card manufacturer's server in the mobile payment system as shown in FIG. 1 includes the structure of the protection device of mobile payment information as mentioned above. In detail, the card manufacturer's server includes:
The first updating unit 31, which is configured to dynamically update replacement code information corresponding to each payment account information stored in a card manufacturer's server.
The second updating unit 32, which is configured to update a mapping relationship between the payment account information stored in the card manufacturer's server and the replacement code information according to the updated replacement code information, each time after updating the replacement code information corresponding to each payment account information stored in the card manufacturer's server.

The replacement code sync unit 33, which is configured to send the updated replacement code information and corresponding payment account information to the mobile terminal to enable the mobile terminal to update the mapping relationship between the payment account information stored in the mobile terminal and the replacement code information and perform a mobile payment using the updated replacement code information, each time after updating the replacement code information corresponding to each payment account information stored in the card manufacturer's server.

Preferably, the card manufacturer's server further includes other components, such as the request receiving unit 34, the replacement code generation unit 35, the mapping relationship storing unit 36, and the replacement code sending unit 37, and/or the mobile payment information receiving unit 38 and the search unit 39, for example. Various embodiments in the specification are described progressively, each embodiments emphasizes its difference that is distinguishes with other embodiments, same or similar descriptions of the embodiments can be referred to each other. For a disclosed device in the embodiments, as it corresponds to the disclosed method(s) in other embodiments, thus, description of the disclosed device is simplified, related description(s) can refer to the descriptions in the foregoing method embodiments.

The above mentioned descriptions in disclosed embodiments make persons skilled in the art be able to perform or utilize the present disclosure. It is obvious for persons skilled in the art to make various modifications on these embodiments, general principles defined in the present disclosure can be applied in other embodiments without departing from the spirit and scope of the present disclosure. Accordingly, the present disclosure is not limited by the embodiments described in the specification, but is within a broadest scope that has same principles and novel feature with the present disclosed.

## Claims

1. A protection method of mobile payment information, comprising:
dynamically updating, by a card manufacturer's server, replacement code information corresponding to each payment account information stored in the card manufacturer's server;
each time after the card manufacturer's server updates the replacement code information corresponding to each payment account information stored in the card manufacturer's server, updating a mapping relationship between the payment account information stored in the card manufacturer's server and the replacement code information according to the updated replacement code information;
each time after the card manufacturer's server updates the replacement code information corresponding to each payment account information stored in the card manufacturer's server, sending the updated replacement code information and corresponding payment account information to a mobile terminal, to enable the mobile terminal to perform a mobile payment using the updated replacement code information.

2. The protection method of mobile payment information of claim 1, before the card manufacturer's server dynamically updates replacement code information sent by the mobile terminal corresponding to each payment account information, further comprising:
receiving, by the card manufacturer's server, a registration request of a payment account sent from the mobile terminal, the registration request of the payment account comprising payment account information;
generating corresponding replacement code information randomly for the payment account information by the card manufacturer's server, and storing a mapping relationship between the payment account information and the generated replacement code information in the card manufacturer's server;
sending the generated replacement code information and corresponding payment account information to the mobile terminal by the card manufacturer's server, to enable the mobile terminal to store the mapping relationship between the payment account information and the generated replacement code information.

3. The protection method of mobile payment information of claim 1, wherein the mobile terminal performing the mobile payment using the updated replacement code information comprises:
sending the updated replacement code information by the mobile terminal to a payment terminal;
sending mobile payment information to the card manufacturer's server by the payment terminal after the payment terminal receives the updated replacement code information, the mobile payment information comprising the updated replacement code information and payment amount information;
searching mapping relations between stored payment account information and replacement code information by the card manufacturer's server, finding payment account information corresponding to the updated replacement code information, and sending the found payment account information and the payment amount information to an issuing bank system through a card manufacturer's payment gateway, to enable the issuing bank system to process a payment according to the found payment account information and the payment amount information.

4. The protection method of mobile payment information of claim 3, wherein the mobile terminal communicates with the payment terminal through near field communication (NFC).

5. The protection method of mobile payment information of any of claims 1 to 4, wherein dynamically updating, by the card manufacturer's server, replacement code information corresponding to each payment account information stored in the card manufacturer's server comprises:
setting an updating period by the card manufacture's server;
updating, by the card manufacturer's server, the replacement code information corresponding to each payment account information stored in the card manufacturer's server periodically according to the updating period.

6. The protection method of mobile payment information of any of claims 1 to 4, wherein dynamically updating, by the card manufacturer's server, replacement code information corresponding to each payment account information stored in the card manufacturer's server comprises:
receiving a replacement code updating request by the card manufacturer's server from the mobile terminal, the replacement code updating request comprising the payment account information;
updating, by the card manufacturer's server, replacement code information corresponding to the payment account information in the replacement code updating request.

7. A protection device of mobile payment information, comprising:
a first updating unit configured to dynamically update replacement code information corresponding to each payment account information stored in a card manufacturer's server;
a second updating unit configured to update a mapping relationship between the payment account information stored in the card manufacturer's server and the replacement code information according to the updated replacement code information, each time after updating the replacement code information corresponding to each payment account information stored in the card manufacturer's server;
a replacement code sync unit configured to send the updated replacement code information and corresponding payment account information to a mobile terminal to enable the mobile terminal to perform a mobile payment using the updated replacement code information, each time after updating the replacement code information corresponding to each payment account information stored in the card manufacturer's server.

8. The protection device of mobile payment information of claim 7, further comprising:
a request receiving unit configured to receive a registration request of the payment account sent from the mobile terminal, the registration request of the payment account comprising payment account information;
a replacement code generation unit configured to generate corresponding replacement code information randomly for the payment account information;
a mapping relationship storing unit configured to store a mapping relationship between the payment account information in the registration request of the payment account and the generated replacement code information in the card manufacturer's server;
a replacement code sending unit configured to send the generated replacement code information generated by the replacement code generation unit and corresponding payment account information to the mobile terminal, to enable the mobile terminal to store the mapping relationship between the payment account information and the generated replacement code information.

9. The protection device of mobile payment information of claim 7, further comprising:
a mobile payment information receiving unit configured to receive the mobile payment information from a payment terminal, the mobile payment information comprising payment amount information and the updated replacement code information sent from the mobile terminal to the payment terminal;
a search unit configured to search the card manufacturer's server for mapping relations between stored payment account information and replacement code information, find payment account information corresponding to the updated replacement code information, and send the found payment account information and the payment amount information to an issuing bank system through a card manufacturer's payment gateway, to enable the issuing bank system to process a payment according to the found payment account information and the payment amount information.

10. The protection device of mobile payment information of any of claims 7 to 10, wherein the first updating unit comprises:
an updating period setting module configured to set an updating period;
a first updating module configured to update the replacement code information corresponding to each payment account information stored in the card manufacturer's server periodically according to the updating period.

11. The protection device of mobile payment information of any of claims 7 to 10, wherein the first updating unit comprises:
a updating request receiving module configured to receive a replacement code updating request from the mobile terminal, the replacement code updating request comprising the payment account information;
a second updating module configured to update replacement code information corresponding to the payment account information in the replacement code updating request.

12. A mobile payment system, comprising a mobile terminal, a payment terminal, a card manufacturer's server, and an issuing bank system that communicates with the card manufacturer's server through a card manufacturer's payment gateway, the card manufacturer's server comprises:
a first updating unit configured to dynamically update replacement code information corresponding to each payment account information stored in the card manufacturer's server;
a second updating unit configured to update a mapping relationship between the payment account information stored in the card manufacturer's server and the replacement code information according to the updated replacement code information, each time after updating the replacement code information corresponding to each payment account information stored in the card manufacturer's server;
a replacement code sync unit configured to send the updated replacement code information and corresponding payment account information to the mobile terminal to enable the mobile terminal to perform a mobile payment using the updated replacement code information, each time after updating the replacement code information corresponding to each payment account information stored in the card manufacturer's server.

13. A mobile payment system of claim 12, wherein the card manufacturer's server further comprises:
a mobile payment information receiving unit configured to receive the mobile payment information from the payment terminal, the mobile payment information comprising payment amount information and the updated replacement code information sent from the mobile terminal to the payment terminal;
a search unit configured to search the card manufacturer's server for mapping relations between stored payment account information and replacement code information, find payment account information corresponding to the updated replacement code information, and send the found payment account information and the payment amount information to the issuing bank system through the card manufacturer's payment gateway, to enable the issuing bank system to process a payment according to the found payment account information and the payment amount information.
